# EUROPEAN PATENT APPLICATION

(11) **EP 4 471 629 A1**
(43) Date of publication of application: **04.12.2024**
(21) Application number: 23315219.8
(22) Date of filing: 30.05.2023
(51) Int. Cl.: G06F 21/32, G06F 21/34

(54) **METHOD FOR ENROLLMENT OF A BIOMETRIC REFERENCE IN A PORTABLE DEVICE**

(71) Applicant: THALES DIS FRANCE SAS, 92190 Meudon (FR)
(72) Inventor: Favreau, Valentin, 92130 Issy-les-Moulineaux (FR); Oung, Richard, 94350 Villiers sur Marne (FR); Chua, Jun Ping Bryan, 92100 Boulogne-Billancourt (FR)
(74) Representative: Scheer, Luc

(57) **Abstract**

The invention is a method for enrollment of a reference (51) in a portable device (10) embedding a biometric sensor (14) in which a first phase includes the following step executed for a plurality of transactions with one or more terminals (20):
- during each current transaction of said plurality of transactions, capturing a candidate biometric data (60) from a subject identifier of a user (50), assigning an indicator (58) to the candidate biometric data (60), said indicator allowing to determine if the user was successfully authenticated during said current transaction and storing the candidate biometric data and said assigned indicator in the portable device;
and in that the method comprises a second phase, in which, upon detection of an event, the portable device identifies a list of candidate biometric data whose assigned indicator reflects a successful authentication of the user, and builds the reference using only said list.

## Description

### (Field of the invention)

The present invention relates to methods for enrolling a biometric reference in a portable apparatus. It relates particularly to methods for enrollment of a user's biometric reference using a biometric sensor embedded in a portable device.

### (Background of the invention)

A portable device can be a smart card comprising a memory, a microprocessor and an operating system for computing treatments. It may comprise services applications like payment or Telecom applications. Smart cards may be considered as secure elements. They comprise a plurality of memories of different types, like non-volatile memory and volatile memory. They are considered as tamper-resistant (or "secure") because they are able to control access to the data they contain and to authorize or not the use of their data by other machines. A smartcard may also provide computation services based on cryptographic components. In general, smartcards have limited computing resources and limited memory resources and they are intended to connect a host machine which may provide them with electric power either in contact mode or contactless mode.

A portable device may connect a terminal device to participate in a transaction. For instance, when the portable device is a payment instrument, it can participate to a payment transaction with a Point-Of-Sale (POS) terminal.

Portable devices embedding a biometric sensor may need to enroll a biometric reference of a genuine user so that they can rely on the enrolled biometric reference to authenticate the user in a further phase.

Usually, the portable device needs to capture between 5 and 12 biometric samples to build a reliable biometric reference.

Many portable devices are devoid of battery or have very limited power resource. Enrollment of a reliable biometric reference by the biometric sensor embedded in the portable device requires the portable device to be powered during several minutes.

The portable device can get energy from a coupled terminal equipment during a transaction involving both the portable device and the terminal equipment.

### (Summary of the Invention)

During the enrollment operation, the portable device captures and stores several biometric samples. Typically, a set of fingerprints of the person handling the portable device is sensed and recorded as biometric samples in the portable device. When the portable device is a payment contactless card, the portable device can capture biometric samples during a contactless payment transaction. It should be noted that the biometric samples are captured and stored without checking their validity. Depending on security rules, the contactless payment transaction can be successfully completed without authenticating the cardholder. For instance, when the amount is below a preset threshold, the card may accept the payment transaction without requiring authentication of the cardholder.

Assuming that the contactless payment card has been lost or stolen and retrieved by the malevolent person, the malevolent person may enroll their own fingerprint into the card instead of the genuine user.

There is a need to prevent someone other than the official user of the card from enrolling their fingerprint into the card.

The invention aims at solving the above mentioned technical problem.

An object of the present invention is a method for enrollment of a biometric reference assigned to a user in a portable device embedding a non-volatile memory and a biometric sensor. The method comprises a first phase including the following step executed for a plurality of transactions between one or more terminals and said portable device:
- during each current transaction of said plurality of transactions, capturing a candidate biometric data from a subject identifier of the user by the biometric sensor, assigning an indicator to the candidate biometric data, said indicator allowing to determine if the user was successfully authenticated during said current transaction and storing the candidate biometric data and said assigned indicator in the non-volatile memory.

The method comprises a second phase, posterior to the first phase, in which, upon detection of a predetermined event, the portable device identifies a list of said candidate biometric data whose assigned indicator reflects that the user was successfully authenticated, and builds the biometric reference using only candidate biometric data belonging to said list.

Advantageously, each indicator may contain a reference of the current transaction during which it was assigned,
during each current transaction, a remote server may try to authenticate the user and stores a pair comprising the reference of the current transaction and a flag reflecting whether the user was successfully authenticated during said current transaction, and
during the second phase, the portable device may retrieve said pairs from the remote server and may identify the list of candidate biometric data by finding the correspondence between stored indicators and flags belonging to the retrieved pairs.

Advantageously, the remote server may detect the predetermined event by comparing the number of stored pairs with a first threshold and the remote server may initiate sending of said pairs to the portable device.

Advantageously, the portable device may retrieve said pairs from the remote server through a software application hosted on a phone, said pairs being conveyed between the portable device and the phone via a NFC^{©} or BLE^{©} channel.

Advantageously, the portable device may detect the predetermined event by comparing the number of stored candidate biometric data with a second threshold, the portable device may be a combi card that voluntarily rejects a contactless transaction in progress with a coupled terminal to force the coupled terminal to establish a wired connection between the remote server and the portable device, and the portable device may retrieve said pairs from the remote server through the wired connection.

Advantageously, during each current transaction, the portable device may try to authenticate the user and may store in the indicator generated during the current transaction a value reflecting whether the user was successfully authenticated during the current transaction.

Advantageously, the method may comprise a third phase, posterior to the second phase, in which, a new list of additional candidate biometric data whose assigned indicator indicates that the user was successfully authenticated is identified and the portable device may refine the biometric reference using additional candidate biometric data belonging to the new list.

Another object of the present invention is a portable device embedding a non-volatile memory and a biometric sensor and able to enroll a biometric reference assigned to a user. The portable device is configured to perform a first phase including the following step executed for a plurality of transactions between one or more terminals and said portable device:
- during each current transaction of said plurality of transactions, the portable device is configured to capture a candidate biometric data from a subject identifier of the user by the biometric sensor, to assign an indicator to the candidate biometric data, said indicator allowing to determine if the user was successfully authenticated during said current transaction and to store the candidate biometric data and said assigned indicator in the non-volatile memory.

The portable device is configured to perform a second phase, posterior to the first phase, in which, upon detection of a predetermined event, the portable device is configured to identify a list of said candidate biometric data whose assigned indicator reflects that the user was successfully authenticated, and to build the biometric reference using only candidate biometric data belonging to said list.

Another object of the present invention is a system comprising a portable device according to the invention, a transaction terminal and a remote server. Each indicator contains a reference of the current transaction during which it was assigned. During each current transaction, the remote server is configured to try to authenticate the user and to store a pair comprising the reference of the current transaction and a flag reflecting whether the user was successfully authenticated during said current transaction. During the second phase, the portable device is configured to retrieve said pairs from the remote server and to identify the list of candidate biometric data by finding the correspondence between stored indicators and flags belonging to the retrieved pairs.

Advantageously, the remote server may be configured to detect the predetermined event by comparing the number of stored pairs with a first threshold and the remote server may be configured to initiate sending of said pairs to the portable device.

Advantageously, the portable device may be configured to retrieve said pairs from the remote server through a software application hosted on a phone, said pairs being conveyed between the portable device and the phone via a NFC^{©} or BLE^{©} channel.

Advantageously, the portable device may be configured to detect the predetermined event by comparing the number of stored candidate biometric data with a second threshold, the portable device may be is a dual card configured to voluntarily reject a contactless transaction in progress with a coupled terminal to force the coupled terminal to establish a wired connection between the remote server and the portable device, and the portable device may be configured to retrieve said pairs from the remote server through the wired connection.

Advantageously, during each current transaction, the portable device may be configured to try to authenticate the user and to store in the indicator generated during the current transaction a value reflecting whether the user was successfully authenticated during the current transaction.

Advantageously, during a third phase, posterior to the second phase, the portable device may be configured to refine the biometric reference using a new list of additional candidate biometric data whose assigned indicator indicates that the user was successfully authenticated.

Advantageously, the portable device may be a payment instrument, the transaction terminal may be a payment terminal and the remote server may be a bank server.

### (Brief description of the drawings)

Other characteristics and advantages of the present invention will emerge more clearly from a reading of the following description of a number of preferred embodiments of the invention with reference to the corresponding accompanying drawings in which:
- Figure 1 shows a first exemplary flow diagram for enrolling a biometric reference in a portable device according to an example of the invention;
- Figure 2 shows a first exemplary architecture of a portable device according to an example of the invention;
- Figure 3 shows a diagram of architecture of a system comprising a portable device a terminal and a remote server according to an example of the invention, and
- Figure 4 shows a second flow diagram for enrolling a biometric reference in a portable device according to an example of the invention.

### (Detailed description of the preferred embodiments)

Smart cards comprise at least one communication interface to exchange data with outside. Some smart cards have a contact interface able to communicate in contact mode as defined by ISO/IEC7816 standards. Some smart cards have a contactless interface able to communicate in contactless mode which may comply with the ISO14443, ISO/IEC21481 or ISO18092 standards.

Some smart cards have both a contact interface and a contactless interface. They are called combi (or combi-type or dual interface) cards.

The invention may apply to any type of portable device embedding one or more biometric sensors. The invention may apply to any type of biometric smart cards. For example, the portable device may be a banking smart card, a transport card, an access badge, a loyalty card or an identity document.

The invention is well suited for any portable device like a bracelet, a ring or a keychain.

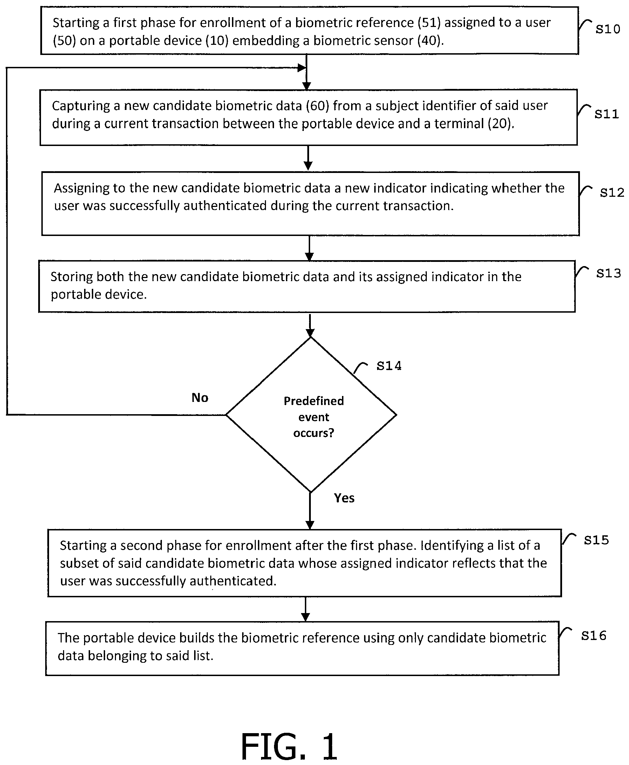

Figure 1 depicts an exemplary flow diagram for enrollment of a biometric reference in a portable device according to an example of the invention.

In this example, the portable device 10 is a payment card embedding a fingerprint sensor 14.

During a first phase of enrollment, the portable device 10 captures a series of candidate biometric data from a user during one or more transactions with one or more terminals.

At this stage, the portable device does not yet contain the biometric reference.

Then during a second phase occurring after the first phase, the portable device builds the biometric reference from the captured candidate biometric data.

Once the portable device contains the biometric reference, the portable device can use it to authenticate the user via a new capture made by the biometric sensor and a match algorithm. The biometric reference is sometimes called biometric pattern or a biometric template.

At a first step S10, the first phase of enrollment of a biometric reference to be assigned to user of the portable device starts. In some embodiments, the first phase starts the first time the portable device is involved in a transaction with a terminal.

In some embodiments, the first phase starts as soon as the user give their consent to enroll their biometric reference in the portable device.

At step S11, a transaction starts between the portable device 10 and a terminal 20 coupled to the portable device. During the current (e.g. active) transaction, the sensor 14 captures a new candidate biometric data from a subject identifier of the user. The subject identifier may be a finger, the face, an iris or any relevant biometric source.

Then the portable device assigns an indicator to the new candidate biometric data. The content of the indicator allows to determine (in a future step) if the user was successfully authenticated during the current transaction. (Step S12).

The portable device stores both the new candidate biometric data and its assigned indicator in a non-volatile memory of the portable device. (Step S13)

The portable device repeats the sequence of steps S11 to S13 for storing a plurality of candidate biometric data and their assigned indicators until a predefined event occurs.

It should be noted that the portable device can perform a series of transactions with one or more terminals.

In some embodiments, the portable device can capture and store more than one new candidate biometric data during a single transaction. In such a case, the portable device may assign the identifier to all candidate biometric data captured during the same transaction or assign as many individual indicators.

At this stage, the biometric reference is not yet generated. Consequently, the portable device cannot use any candidate biometric data captured during the first phase to try to authenticate the user.

Once the predefined event occurred at step S14, the portable device enters in a second phase that is posterior to the first phase. The second phase aims at building the biometric reference from the candidate biometric data stored during the first phase.

At step S15, the portable device identifies a list comprising the stored candidate biometric data whose assigned indicator reflects that the user was successfully authenticated during the transaction leading to the capture of the candidate biometric data.

The portable device builds the biometric reference using only candidate biometric data belonging to the list. (Step S16). The portable device can build the biometric reference by generating a single summary data or by keeping individually all selected candidate biometric data which form the biometric reference.

The portable device discards candidate biometric data whose assigned indicator reflects that the user was not successfully authenticated and can erase them to free space in its memory.

At this stage, the biometric reference is now existing in the portable device and its enrollment is completed. Consequently, the portable device can now use the biometric reference to try to authenticate the user using a further data captured by the sensor 14.

In some embodiments, each indicator contains a reference of the transaction of the first phase (i.e. current transaction) during which it was assigned. For instance, each indicator can contain the Application Transaction Counter (ATC) as defined by EMV Integrated Circuit Card Specifications for Payment Systems - Book 3 : Application Specification" (version 4.4 - October 2022).

During each transaction of the first phase (also referred to as "current transaction"), a remote server 30 can try to authenticate the user (thanks to data retrieved from the user and sent by the terminal coupled to the portable device) and store a pair comprising the reference 31 of the current transaction and a flag 32 reflecting whether the user was successfully authenticated during the current transaction. The reference of the current transaction can contain the Application Transaction Counter (ATC).

During the second phase, the portable device can retrieve the pairs from the remote server and identify the list of candidate biometric data by finding the correspondence between indicators stored in the portable device and flags belonging to the retrieved pairs. In other words, the portable device can rely on the remote server to know which captured biometric samples are trusted because they have been sensed from a user authenticated by the remote server.

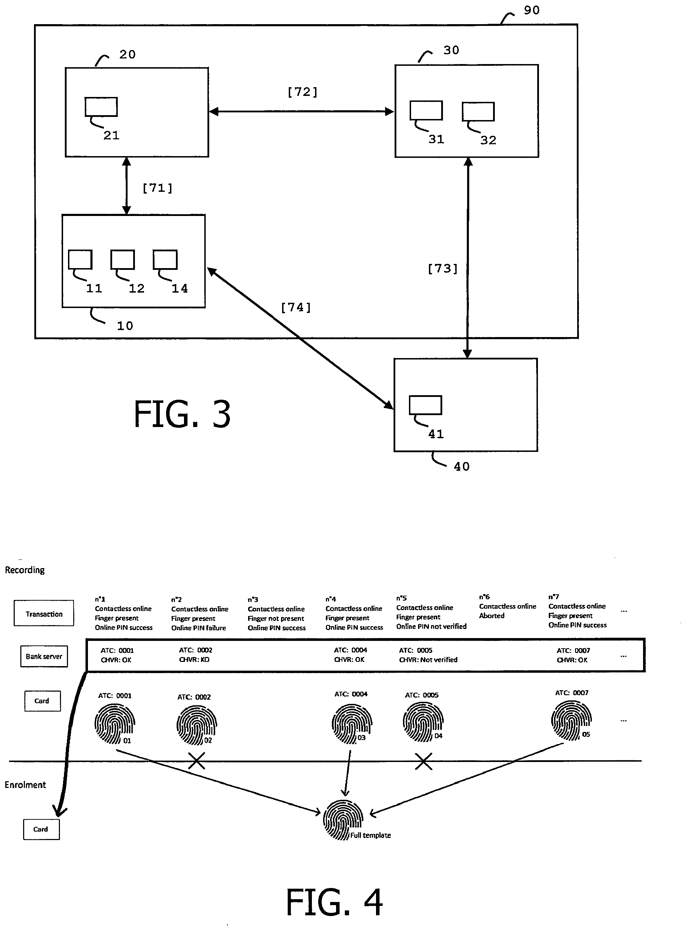

By way of illustration, Figure 4 depicts a flow diagram for enrolling a biometric reference in a portable device based on pairs generated by a remote server according to an example of the invention.

Figure 4 shows a series of seven transactions which occurred during the first phase. The first transaction is a contactless payment wherein the user present a finger on the card sensor 14 and wherein the PIN (e.g. secret code or password) entered by the user on the Payment terminal 20 is successfully checked by the bank server 30. At the end of transaction number 1, the bank server stores a first pair comprising a first reference containing "0001" (i.e. the ATC value) and a first flag (that could be named CHVR) containing "OK" (or a value corresponding to "user successfully authenticated"). Similarly, the payment card stores a first set comprising a first indicator containing "0001" (i.e. the ATC value) and a first candidate biometric data (e.g. a captured fingerprint or an extract of a captured fingerprint).

The second transaction is a contactless payment wherein the user present a finger on the card sensor 14 and wherein the checking of the PIN entered by the user on the Payment terminal 20 fails at the bank server 30. At the end of transaction number 2, the bank server stores a second pair comprising a second reference containing "0002" (i.e. the ATC value) and a second flag containing "KO". Similarly, the payment card stores a second set comprising a second indicator containing "0002" and a second candidate biometric data.

The third transaction is a contactless payment wherein the user does not present a finger on the card sensor 14 and wherein the checking of the PIN entered by the user on the Payment terminal 20 succeed at the bank server 30. At the end of transaction number 3, the bank server does not record a new pair since no finger was presented on the sensor.

Bank server can know if a biometric match was attempted or not on the card side, as its results can be part of transaction data sent to bank server. Transaction data usually contains transaction details (amount, date, currency code, cardholder verification results, ATC) along with a signature (transaction cryptogram) as proof that the card participated to the transaction.

Similarly, the payment card does not record a new set as the sensor did not capture a new candidate biometric data.

Alternatively, at the end of transaction number 3, the bank server may record a new pair as done for previous transactions.

The fourth transaction is a contactless payment wherein the user present a finger on the card sensor 14 and wherein the PIN entered by the user on the Payment terminal 20 is successfully checked by the bank server 30. At the end of transaction number 4, the bank server stores a third pair comprising a third reference containing "0004" and a third flag containing "OK".

Similarly, the payment card stores a third set comprising a third indicator containing "0004" and a third candidate biometric data.

The fifth transaction is a contactless payment wherein the user present a finger on the card sensor 14 and wherein no PIN was not checked by the bank server 30. At the end of transaction number 5, the bank server stores a fourth pair comprising a fourth reference containing "0005" and a fourth flag containing a value meaning "PIN Not verified". Similarly, the payment card stores a fourth set comprising a fourth indicator containing "0005" and a fourth candidate biometric data.

The sixth transaction is a contactless payment that aborted. At the end of transaction number 6, the bank server does not record a new pair and the card does not record a new set.

The seventh transaction is a contactless payment wherein the user present a finger on the card sensor 14 and wherein the PIN entered by the user on the Payment terminal 20 is successfully checked by the bank server 30. At the end of transaction number 7, the bank server stores a fifth pair comprising a fifth reference containing "0007" and a fifth flag containing "OK". Similarly, the payment card stores a fifth set comprising a fifth indicator containing "0007" and a fifth candidate biometric data.

During the second phase, the card retrieves the five existing pairs stored in the bank server then compares the content of the corresponding references with the content of its own indicators to put back together the data coming from the same transaction. For instance, since the first reference and the first indicator contain the same value (i.e. "0001"), the card deduces that the first flag is attached to the first candidate biometric data. Since the first flag contains "OK", the card deduces that the first candidate biometric data must be used to build the biometric reference.

By analyzing all retrieved pairs, the card knows that first, third and fifth candidate biometric data should be used to generate the biometric reference (also named "full template"). Conversely, the card knows that second and fourth candidate biometric data should be discarded.

For the sake of simplicity and clarity, the pair and set numberings are synchronized in the example shown above. However, it may happen that a discrepancy exists in their numbering. In other words, the nth pair may not correspond to the nth set.

In some embodiments, several candidate biometric data may correspond to a same pair if they have been captured during a unique transaction.

In some embodiments, the remote server can detect the occurrence of the predetermined event by comparing the number of stored pairs with a first threshold. For instance, the first threshold may be set to 5 or 9. Then the remote server initiates sending of its pairs to the portable device. The remote server can be prepared to send the pairs during the next transaction involving the portable device.

Preferably, the remote server keeps track of the identity of the portable device to which the pairs are uniquely associated. For example, the server can allocate a device identifier to all pairs created during a transaction involving the portable device.

In some embodiments, the remote server can detect occurrence of the predetermined event by comparing the number of stored pairs having a flag containing "OK" with a preset threshold. For instance, the preset threshold may be set to 2 or 7.

In some embodiments, the predetermined event can be a date, a duration, or a decision made by the remote server or by the portable device.

Figure 3 shows a diagram of architecture of a system 90 comprising a portable device 10, a terminal 20 and a remote server 30 according to an example of the invention.

In the example of Figure 3, the portable device 10 is a payment card, the terminal 20 is a Point-of-Sale (POS) terminal and the remote server 30 is a bank server.

The payment card 10 comprise a non-volatile memory 11, a secure chip 12 and a biometric sensor 14. The payment card 10 can establish a communicate channel 71 with the terminal 20 in contact or contactless mode. The terminal 20 can establish a communicate channel 72 with the remote server 30 via one or more wired networks.

The user of the payment card can own a phone 40 hosting a software application 41 designed for banking purpose. In some embodiments, the phone 40 is paired with the smart card 10 to store a secret value or a key allowing to securely exchanging messages having a content at least partly enciphered/signed.

In some embodiments, the phone 40 can establish a communication channel 73 with the bank server 30 through a combination of Telecom (or Wi-Fi^{®} or Bluetooth^{®}) network(s) and the Internet. The phone 40 can be able to communicate with the payment card through a NFC^{©} or Bluetooth Low Energy^{©} (BLE) communication channel 74.

In some embodiments, once the remote server has detected the occurrence of the predetermined event, it can send a message to the software application 41 to warn the user that a bulk of data is ready to be downloaded from the bank server to the payment card. The message may contain the pairs created by the bank server during the first phase. Then the software application can send the pairs to the payment card through a NFC^{©}, a BLE^{©} or any available channel.

The payment card can get enough energy from the coupled phone (via power harvesting in the generated electromagnetic field) to complete the second phase.

Alternatively, the payment card can wait for the next connection with a payment terminal or an Automated Teller Machine (ATM) to complete the second phase by getting the pairs and building the biometric reference.

In some embodiments, the portable device can be payment card having both contact and contactless features (i.e. a combi card). The portable device can be able to detect the occurrence of the predetermined event by comparing the number of stored candidate biometric data with a second threshold that may be set to 4 or 14 for instance. Then, the payment card can voluntarily rejects a contactless payment transaction in progress with a coupled terminal to force the coupled terminal to establish a wired connection between the bank server and the payment card. Thus, the payment card can request the bank server to send its pairs through the wired connection.

In some embodiments, during each transaction of the first phase, the portable device can try to authenticate the user by checking the PIN entered through the user interface of the coupled terminal and store in the indicator generated during the transaction a value reflecting whether the user was successfully authenticated during the transaction. In such a case, the portable device remain independent from the remote server for the user authentication.

This way, the portable device can detect the occurrence of the predetermined event by comparing the number of stored candidate biometric data (or the number of indicators reflecting a successful user authentication) with a predefined threshold to start the second phase and building the biometric reference without requiring data to be downloaded from a remote server to the portable device.

In some embodiments, a first batch of candidate biometric data captured during transactions where user is authenticated by the remote server and a second batch of candidate biometric data captured during transactions where user is authenticated by the portable device can be used to build the biometric reference during the second phase.

In some embodiments, the method can comprise a third phase that is posterior to the second phase. During the third phase, the portable device can capture one or more additional candidate biometric data and store them with associated indicators. Then the portable device can identify a new list of additional candidate biometric data whose assigned indicator indicates that the user was successfully authenticated is identified and refine (e.g. update) the existing biometric reference 51 using additional candidate biometric data belonging to the new list. Thus, the portable device can improve the biometric reference by taking into account additional candidate biometric data captured during a process of authentication of the user via data captured by the sensor 14.

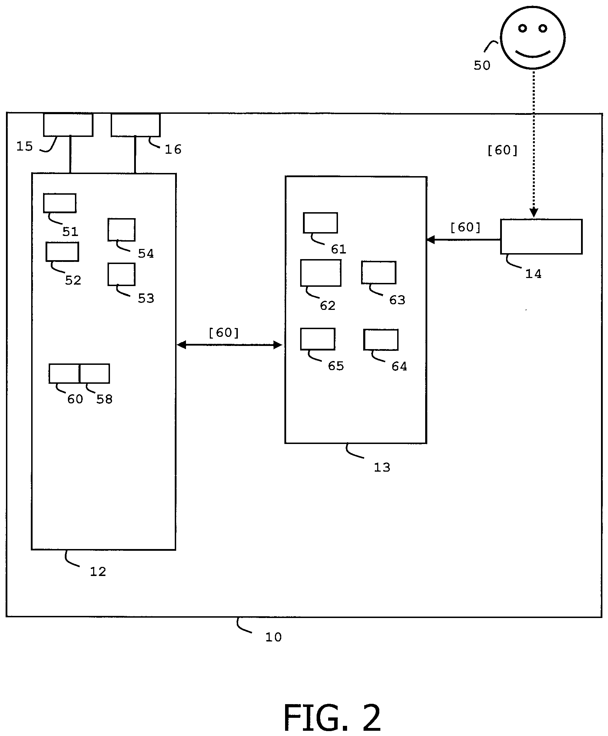

Figure 2 shows an exemplary architecture of a portable device 10 according to an example of the invention.

In this example, the portable device 10 is a payment smart card intended to be coupled to a payment terminal to perform payment transactions.

The payment card 10 comprises both a physical communication interface 15 designed to communicate in contact mode with payment terminals and a physical communication interface 16 designed to communicate in contactless mode with a contactless apparatus like a phone.

The payment card 10 comprises a biometric sensor 14 that can be a fingerprint reader.

The payment card 10 comprises a hardware monitoring unit 13 designed to monitor the sensor and a hardware secure chip 12 including an operating system 52. The monitoring unit 13 comprises a hardware processor 61 able to execute an anti-spoofing algorithm 62 to detect fake captured biometric data. The secure element 12 comprises a hardware processor 53 able to execute a match algorithm 54 for checking whether a captured biometric data is close enough to the biometric reference. The secure chip 12 and the hardware monitoring unit 13 are linked by a bus and able to exchange data.

The secure chip 12 is linked to the two communication interfaces 15 and 16 and able to exchange data with outside.

In some embodiments, the secure chip 12 and the monitoring unit 13 can be merged in a unique hardware component.

The operating system 52 is configured to perform a first phase during which a plurality of transactions between one or more terminals and the portable device are carried out. During each transaction of this plurality of transactions, the portable device is configured to capture a candidate biometric data 60 from a subject identifier of the user 50 via the biometric sensor 14. The candidate biometric data 60 can be processed and sent to the secure chip 12. Then the operating system 52 assigns an indicator 58 to the captured candidate biometric data. The indicator allows determining if the user was successfully authenticated during said transaction. The operating system 52 stores the candidate biometric data 60 and its assigned indicator in the non-volatile memory 11 of the portable device.

The operating system 52 is configured to perform a second phase that is posterior to the first phase. During the second phase, upon detection of a predetermined event, the operating system 52 is configured to identify a list of candidate biometric data (among the candidate biometric data stored during the first phase) whose assigned indicator reflects that the user was successfully authenticated and to build the biometric reference using only candidate biometric data belonging to the identified list.

In some embodiments, each indicator stored in the portable device 10 contains a reference of the transaction of the first phase (i.e. current transaction) during which it was assigned. The reference of the current transaction can be a transaction counter or any value allowing to uniquely identifying a transaction among a series of transactions. For instance, the reference of the current transaction can be a timestamp.

During each transaction of the first phase, the remote server 30 (See Figure 3) can be configured to try to authenticate the user via a PIN code typed by the user on the transaction terminal 20 and to store a pair comprising a reference of the current transaction and a flag reflecting whether the user was successfully authenticated during the current transaction.

During the second phase, the remote server can be configured to send the pairs it generated to the portable device (via a transaction terminal or a phone). The portable device can be configured to identify a list of candidate biometric data by finding the correspondence between indicators previously stored in the memory of the portable device and flags belonging to the received pairs.

In some embodiments, the remote server can be configured to send to the portable device only pairs having a flag reflecting that the user was successfully authenticated during the corresponding transaction.

In some embodiments, the remote server can be configured to detect the predetermined event by comparing the number of stored pairs with a first threshold and to initiate sending of the pairs to the portable device.

In some embodiments, the portable device is configured to retrieve the pairs from the remote server through a software application 41 hosted on a phone 40.

In some embodiments, the portable device can be a combi card configured to detect the predetermined event by comparing the number of stored candidate biometric data with a second threshold. The portable device can be configured to voluntarily reject a contactless transaction in progress with the coupled transaction terminal to force the coupled terminal to establish a wired connection between the remote server and the portable device. Additionally, the portable device can be configured to retrieve the pairs from the remote server through the established wired connection.

In some embodiments, during each transaction of the first phase, the portable device can be configured to try to authenticate the user (by checking a PIN entered on the coupled terminal 20) and to store in the indicator generated during the current transaction a value reflecting whether the user was successfully authenticated during the current transaction. Thus, the portable device may store all elements allowing building the biometric reference at the second phase without having to download pairs from the remote server.

Thanks to some embodiments of the invention, a genuine user may take advantage of usual transactions to capture a series of biometric sub-templates that are used in a second phase for automatically building a biometric reference which is enrolled in the portable device.

The invention is not limited to the described embodiments or examples. In particular, the described examples and embodiments may be combined.

The invention is not limited to payment smart cards and applies to any portable device comprising at least one biometric sensor.

The portable device may comprise several biometric sensors of different types and may capture candidate biometric data through different sensors.

Although examples of the invention have been mainly provided in the banking domain, the invention also applies to other domains. For example, the portable device may be an identity document or an access apparatus providing access to a virtual area, a physical area like a building or a transport network.

## Claims

1. A method for enrollment of a biometric reference (51) assigned to a user (50) in a portable device (10) embedding a non-volatile memory (11) and a biometric sensor (14),
**characterized in that** the method comprises a first phase including the following step executed for a plurality of transactions between one or more terminals (20) and said portable device:
- during each current transaction of said plurality of transactions, capturing a candidate biometric data (60) from a subject identifier of the user by the biometric sensor, assigning an indicator (58) to the candidate biometric data (60), said indicator allowing to determine if the user was successfully authenticated during said current transaction and storing the candidate biometric data and said assigned indicator in the non-volatile memory;
and **in that** the method comprises a second phase, posterior to the first phase, in which, upon detection of a predetermined event, the portable device identifies a list of said candidate biometric data whose assigned indicator reflects that the user was successfully authenticated, and builds the biometric reference using only candidate biometric data belonging to said list.

2. The method according to claim 1, wherein each indicator contains a reference of the current transaction during which it was assigned,
wherein, during each current transaction, a remote server (30) tries to authenticate the user and stores a pair comprising the reference (31) of the current transaction and a flag (32) reflecting whether the user was successfully authenticated during said current transaction, and
wherein, during the second phase, the portable device retrieves said pairs from the remote server and identifies the list of candidate biometric data by finding the correspondence between stored indicators and flags belonging to the retrieved pairs.

3. The method according to claim 2, wherein the remote server detects the predetermined event by comparing the number of stored pairs with a first threshold and wherein the remote server initiates sending of said pairs to the portable device.

4. The method according to claim 3, wherein the portable device retrieves said pairs from the remote server through a software application (41) hosted on a phone (40), said pairs being conveyed between the portable device and the phone via a NFC^{©} or BLE^{©} channel.

5. The method according to claim 2, wherein the portable device detects the predetermined event by comparing the number of stored candidate biometric data with a second threshold, wherein the portable device is a combi card that voluntarily rejects a contactless transaction in progress with a coupled terminal to force the coupled terminal to establish a wired connection between the remote server and the portable device, and wherein the portable device retrieves said pairs from the remote server through the wired connection.

6. The method according to claim 1, wherein, during each current transaction, the portable device tries to authenticate the user and stores in the indicator generated during the current transaction a value reflecting whether the user was successfully authenticated during the current transaction.

7. The method according to claim 1, wherein the method comprises a third phase, posterior to the second phase, in which, a new list of additional candidate biometric data whose assigned indicator indicates that the user was successfully authenticated is identified and the portable device refines the biometric reference (51) using additional candidate biometric data belonging to the new list.

8. A portable device (10) embedding a non-volatile memory (11) and a biometric sensor (14) and able to enroll a biometric reference (51) assigned to a user (50),
**characterized in that** the portable device is configured to perform a first phase including the following step executed for a plurality of transactions between one or more terminals (20) and said portable device:
- during each current transaction of said plurality of transactions, the portable device is configured to capture a candidate biometric data (60) from a subject identifier of the user by the biometric sensor, to assign an indicator (58) to the candidate biometric data (60), said indicator allowing to determine if the user was successfully authenticated during said current transaction and to store the candidate biometric data and said assigned indicator in the non-volatile memory;
and **in that** the portable device is configured to perform a second phase, posterior to the first phase, in which, upon detection of a predetermined event, the portable device is configured to identify a list of said candidate biometric data whose assigned indicator reflects that the user was successfully authenticated, and to build the biometric reference using only candidate biometric data belonging to said list.

9. A system (90) comprising a portable device according to claim 8, a transaction terminal and a remote server (30),
wherein each indicator contains a reference of the current transaction during which it was assigned,
wherein, during each current transaction, the remote server (30) is configured to try to authenticate the user and to store a pair comprising the reference of the current transaction and a flag reflecting whether the user was successfully authenticated during said current transaction, and
wherein, during the second phase, the portable device is configured to retrieve said pairs from the remote server and to identify the list of candidate biometric data by finding the correspondence between stored indicators and flags belonging to the retrieved pairs.

10. A system according to claim 9, wherein the remote server is configured to detect the predetermined event by comparing the number of stored pairs with a first threshold and wherein the remote server is configured to initiate sending of said pairs to the portable device.

11. The system according to claim 10, wherein the portable device is configured to retrieve said pairs from the remote server through a software application (41) hosted on a phone (40), said pairs being conveyed between the portable device and the phone via a NFC^{©} or BLE^{©} channel.

12. The system according to claim 9, wherein the portable device is configured to detect the predetermined event by comparing the number of stored candidate biometric data with a second threshold, wherein the portable device is a combi card configured to voluntarily reject a contactless transaction in progress with a coupled terminal to force the coupled terminal to establish a wired connection between the remote server and the portable device, and wherein the portable device is configured to retrieve said pairs from the remote server through the wired connection.

13. The system according to claim 9, wherein, during each current transaction, the portable device is configured to try to authenticate the user and to store in the indicator generated during the current transaction a value reflecting whether the user was successfully authenticated during the current transaction.

14. The system according to claim 9, wherein during a third phase, posterior to the second phase, the portable device is configured to refine the biometric reference (51) using a new list of additional candidate biometric data whose assigned indicator indicates that the user was successfully authenticated.

15. The system according to claim 9, wherein the portable device is a payment instrument, the transaction terminal is a payment terminal and the remote server is a bank server.
